# EUROPÄISCHE PATENTSCHRIFT

(11) **EP 3 118 614 B1**
(45) Veröffentlichungstag und Bekanntmachung des Hinweises auf die Patenterteilung: **29.06.2022**
(21) Anmeldenummer: 16179510.9
(22) Anmeldetag: 14.07.2016
(51) Int. Cl.: G01N 27/12

(54) **KERAMISCHES GAS- UND TEMPERATURSENSORELEMENT**
CERAMIC GAS AND TEMPERATURE SENSING ELEMENT
ÉLEMENT DE CAPTEUR CERAMIQUE DE TEMPERATURE ET DE GAZ

(30) Priorität: 15.07.2015 DE 102015213270
(43) Veröffentlichungstag der Anmeldung: 18.01.2017
(73) Patentinhaber: UST Umweltsensortechnik GmbH, 99331 Geratal, OT Geschwenda (DE)
(72) Erfinder: KIESEWETTER, Dr. Olaf, 98716 Geschwenda (DE); KIESEWETTER, Nils, 98716 Geschwenda (DE); WITZ, Eva, 99330 Gräfenroda (DE); BOSE, Marcus, 99338 Angelroda (DE)
(74) Vertreter: Liedtke, Klaus

(56) Entgegenhaltungen:
- EP-A2- 1 602 924
- DE-A1-102009 011 298
- DE-C1- 4 139 721
- US-A- 5 019 885
- US-A- 6 145 371
- US-A1- 2015 021 716
- US-A1- 2015 192 509

## Beschreibung

Die Erfindung betrifft ein keramisches Sensorelement mit einer Membran, auf der sensitive Elemente und Kontaktflächen angebracht sind. Das keramische Sensorbauelement ist insbesondere für Gas- und Temperatursensoren, die bei hohen Temperaturen eingesetzt werden, geeignet. Unter einer Membran wird ein bewegliches, dünnes, flächiges Bauteil verstanden.

Keramische Sensoren werden in zahlreichen Anwendungen eingesetzt, beispielsweise um in rauen Umgebungen physikalische und chemische Größen zu messen.

Aus dem Stand der Technik sind zahlreiche Sensoren bekannt, die auf der Basis keramischer Materialien sowie auf der Basis von Siliziumgroßserientechnologie beruhen. Diese Sensoren sollen an unterschiedliche Applikationen bestmöglich angepasst werden können.

Bei den Anwendungen in der Gassensorik ist es notwendig, das Adsorptions- bzw. Desorptionsprozesse schnell ablaufen, um bei Betriebstemperaturen zwischen 200 °C - 300 °C eingesetzt werden zu können. Gleichzeitig müssen diese Sensoren sowohl in sehr rauen Umgebungen verwendet werden können sowie zur Reinigung der Sensoren bei Temperaturen von 500 °C bis 600 °C Pyrolyseverfahren und Belastungen nach verschiedenen Algorithmen durchführen können.

Die bisher in der Mikrosystemtechnik verwendete Aufbau- und Verbindungstechnik (sogenannte AVT-Technologie) ermöglichen diese Verfahren. Die Anwendung für Gassensoren mit freitragenden Chips erfordert jedoch, dass die freitragenden Chips mittels dicker Drähte kontaktiert werden, um eine ausreichende mechanische Stabilität zu erreichen. Vorteilhaft ist dabei, dass im Temperaturpulsbetrieb die Energie schnell aus dem Sensor über die Drähte abgeleitet werden kann. Aus energetischer Sicht ist dieser Aufbau jedoch ungünstig, da der Heizenergiebedarf bei Temperaturwechsel sehr hoch ist, weil die Wärmekapazität des Systems nicht klein genug werden kann.

Im Stand der Technik werden diese Nachteile durch die Verwendung von Membransystemen teilweise beseitigt, so dass diese Sensorträgersysteme im dynamischen Betrieb schnell aufgeheizt und abgekühlt werden können. Nachteil ist hierbei, dass durch die Aufheizung der Membran auf Grund der Längenausdehnung dieser ein mechanischer Stress entsteht, der zur Zerstörung der Sensoren führen kann.

Aus DE 198 14 857 C2 ist ein Gassensor nach dem Prinzip der Austrittsarbeitsmessung bekannt, bei dem auf einem elektrisch isolierenden Substrat oberflächlich verlaufende Kontaktiermittel sowie gassensitive Schichten und ein Mosfet-Transitor aufgebracht sind.

Ferner ist in DE 10 2012 010 423 A1 eine Vorrichtung zur Gasdetektion beschrieben, bei der eine röhrenförmige zylindrische Vorrichtung verwendet wird, die keramische Folien als beheizte Plattform für die Gasdetektion verwendet und die eine Elektrodenstruktur, eine Funktionsschicht und eine Widerstands-Heizleiterschicht aufweist.

Ein weiteres Gassensorbauteil ist in DE 20 2014 102 842 U1 beschrieben, mit einem Gassensorchip, der eine gassensitive Schicht und einen Heizer, Kontaktflächen zum elektrischen Kontaktieren des Gassensorbauteils und einen Chipträger enthält. Der Gassensor wird teilweise von einer Formmasse umschlossen.

Die DE 10 2013 226 175 A1 beschreibt einen Abgassensor für eine Brennkraftmaschine, bei dem auf Isolierträgerschichten aus Keramiken eine Messstruktur in Form einer ersten Elektrode und einer zweiten Elektrode aufgebracht ist, wobei die Elektroden in Form zweier interdigitaler, ineinandergreifender Kammelektroden ausgeführt sind. Auf einer Isolierschicht sind ein Heizer und die Messstruktur angebracht. Die Messstruktur ist kammartig ausgebildet.

In DE 10 2012 211 039 A1 ist ein Gassensor beschrieben, bei dem in einem metallischen Gehäuse ein Sensorbauelement angeordnet ist. Das Sensorbauelement ist mit einer Interdigitalstruktur versehen und an einer Seite mit einem Trägerbauteil verbunden.

Aus DE 10 2009 011 298 A1 ist ein Gassensor bekannt, bei dem auf einem Keramiksubstrat Messelektroden interdigital angeordnet sind. Der Aufbau der Messelektroden ist kreissymmetrisch.

Ferner ist in DE 10 2007 013 522 A1 ein Sensorelement beschrieben, bei dem eine erste und eine zweite Messelektrode angeordnet sind, die als Interdigitalelektroden ausgeführt sind. Das Sensorelement weist einen planaren keramischen Körper auf, der durch Zusammenlaminieren von mit Funktionsschichten bedruckten keramischen Folien und anschließendem Sintern der laminierten Struktur hergestellt wird.

In US 6,145,371 A ist ein keramisches Sensorelement beschrieben, das ein keramisches Substrat enthält, auf dem sensitive Schichten und Leiterstrukturen angeordnet sind.

In EP 1 602 924 A2 sind eine Vorrichtung und ein Verfahren zur Detektion von Luftinhaltsstoffen beschrieben, wobei auf einem Keramikträger gassensitive Schichten und Leiterstrukturen angeordnet sind.

Der Erfindung liegt die Aufgabe zu Grunde, ein verbessertes Sensorelement zu schaffen, welches eine ausreichende mechanische Stabilität, einen geringen Energieverbrauch und verbesserter Dynamik ermöglicht.

Die Aufgabe wird erfindungsgemäß durch ein Sensorelement mit den im Anspruch 1 genannten Merkmalen gelöst.

Vorteilhafte Ausgestaltungen der Erfindung sind Gegenstand der Unteransprüche.

Das Sensorbauelement besteht aus einer Membran, bei der die sensitiven Schichten und die Kontaktflächen auf einem als Membran ausgebildeten Keramikträger aufgebracht sind, der in einseitiger Aufhängung fest mit einem Trägerfuß verbunden ist. Auf dem Keramikträger sind die Kontaktflächen und gassensitive Schichten und/oder mäanderförmige Leiterstrukturen angeordnet.

Durch die einseitige Aufhängung einer Membran werden Belastungen durch Längenausdehnung vermieden.

Die Dicke der Membran liegt im Bereich 10 bis 50 µm, um ein schnelles Aufheizen zu ermöglichen. Es ist vorteilhaft, Membranen aus Aluminiumoxid zu verwenden. Auf der Oberseite der Membran können Leiterstrukturen aus Platin appliziert sein, die durch weitere Funktionsschichten, wie halbleitende Metalloxide für Gassensoren oder nanoporöse hochionisierende Metalloxide für Feuchtesensoren oder Heizer- sowie Widerstandsstrukturen für bolometrische Anwendungen oder für Strömungssensoren Anwendung findet. Die Strukturen können mit fotolitographischen oder Laserstrukturierungsverfahren erzeugt werden.

Eine weitere vorteilhafte Ausführung sieht vor, dass auf dem Keramikträger nebeneinander mehrere gassensitive Schichten und die damit verbundenen Kontaktflächen angeordnet sind. Damit können bei einer Anordnung verschiedene Parameter erfasst werden.

Zur besseren Wärmeableitung aus dem System ist die Rückseite der einseitig aufgehängten Membran durch kühlkörperähnliche Strukturen in der Lage, die Energie besser abzustrahlen oder über Konvektion abzugeben. Die Kontaktierung der Elektroden erfolgt hierbei über Bondverbindungen oder Lötkontakte.

Eine vorteilhafte Ausführung sieht vor, zur Verbesserung der Wärmeableitung Ausnehmungen im Trägerfuß anzubringen.

Die Erfindung sieht vor, dass der Trägerfuß aus dem Material des Keramikträgers besteht und dass der Trägerfuß mit dem Keramikkörper einstückig ausgebildet ist.

Ferner ist es möglich, dass der Trägerfuß Ausnehmungen aufweist, wobei eine Seite eben ausgebildet ist und an der gegenüberliegenden Seite Berührungsflächen angeordnet sind.

Bei einer weiteren Ausführungsform ist das Sensorelement in einem Gehäuse angeordnet, dessen Außenabmessungen an die Abmessungen des Sensorelements angepasst sind. Damit kann das Handling erleichtert werden. Das Gehäuse besteht vorzugsweise aus einem offenporigen Material, um die Gasdiffusion zu ermöglichen.

Ausführungsbeispiele der Erfindung werden im Folgenden anhand von Zeichnungen näher erläutert.

Darin zeigen:
- Figur 1: ein Sensorbauelement mit gassensorischen Wirkschichten auf der Oberseite,
- Figur 2: ein Sensorbauelement mit mäanderförmigen Leiterstrukturen auf der Oberseite,
- Figur 3: ein Sensorbauelement mit mehreren Leiterstrukturen,
- Figur 4: ein Sensorbauelement mit einem Trägerfuß, der mit Ausnehmungen versehen ist,
- Figur 5: ein Sensorbauelement mit einem Trägerfuß, der mit gerundeten Ausnehmungen versehen ist,
- Figur 6: ein Sensorbauelement mit einem Trägerfuß, dessen gerundete Ausnehmungen an seiner Oberseite angeordnet sind,
- Figur 7: ein Sensorbauelement, das von einem oben offenen Gehäuse umgeben ist,
- Figur 8: ein Sensorbauelement mit einem Gehäuse, das an seiner Unterseite Ausnehmungen aufweist,
- und Figuren 9a, 9b: ein Sensorbauelement mit einem Gehäuse, bei dem die Berührungsfläche zwischen Trägerfuß und Gehäuse verringert ist.

Einander entsprechende Teile sind in allen Figuren mit den gleichen Bezugszeichen versehen.

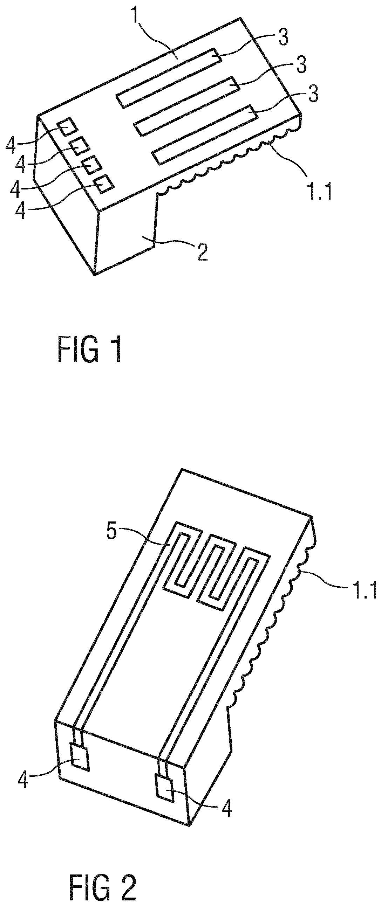

**Figur 1** zeigt eine Ausführungsform des Sensorelementes, bei dem auf dem als Membran ausgebildeten Keramikträger 1 mehrere gassensitive Schichten 3 sowie Kontaktflächen 4 zum elektrischen Kontaktieren des Sensorelementes angeordnet sind. Der Keramikträger 1 weist eine Dicke von 10 bis 50 µm auf und besteht vorzugsweise aus Aluminiumoxid. An einem Ende des Keramikträgers befindet sich ein Trägerfuß 2, mit dem das Sensorelement an einem nicht dargestellten Trägerbauteil befestigt werden kann. Der Trägerfuß 2 ist einstückig mit dem Keramikträger gestaltet. Der Keramikträger 1 ist an seiner Unterseite, also an der Seite, die sich der beschichteten Seite entgegengesetzt befindet, mit einer Kühlkörperstruktur 1.1 versehen.

In **Figur 2** ist ein Sensorbauelement dargestellt, bei dem auf dem Keramikträger 1 eine mäanderförmige Leiterstruktur 5 aus Platin aufgebracht ist. Die beiden Enden der Leiterstruktur 5 sind mit Kontaktflächen 4 verbunden, die im hier gezeigten Beispiel seitlich am Trägerfuß 2 angeordnet sind.

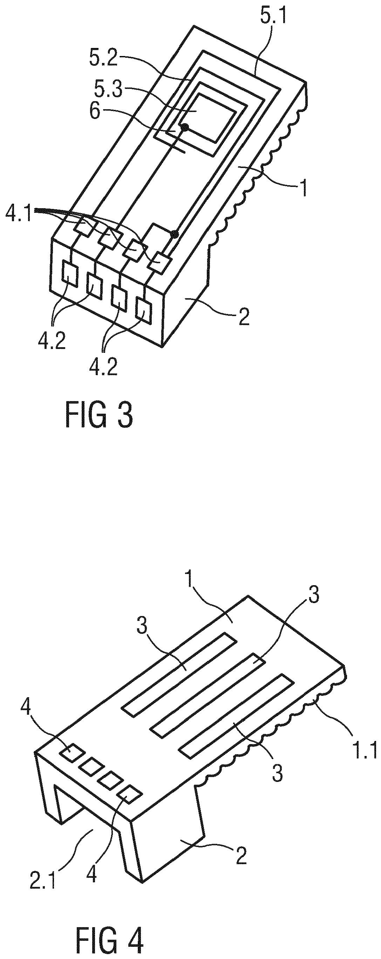

**Figur 3** zeigt ein Sensorelement mit mehreren Leiterstrukturen. Eine erste Leiterstruktur 5.1 dient als Heizer, eine zweite Leiterstruktur 5.2 ist mäanderförmig ausgebildet und dient als Temperatursensor. Zwischen der Leiterstruktur 5.2 und einer Deckelektrode 5.3 befindet sich eine nanoporöse Isolationsschicht 6. Die Leiterstrukturen können über Bondfelder 4.1 oder über Lötkontakte 4.2 mit einer Auswerteelektronik verbunden werden. Diese Anordnung ist für mehrfache Anwendungsfälle geeignet, vorzugsweise zur Strömungsmessung oder zur Feuchtemessung.

Die **Figuren 4 bis 6** zeigen Ausführungen, bei denen der Trägerfuß 2 mit Ausnehmungen versehen ist, um die Wärmeableitung zu verringern.

Bei der in **Figur 4** dargestellten Ausführung sind Trägerfuß 2 und Keramikträger 1 einstückig ausgeführt und die Ausnehmung weist einen rechteckigen Querschnitt auf.

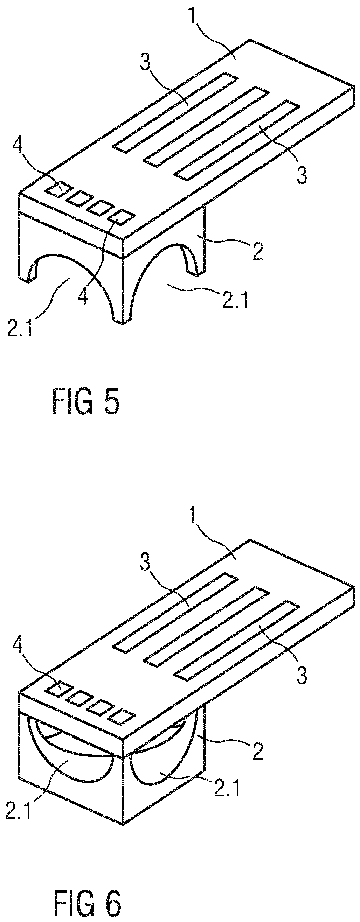

Bei der in **Figur 5** dargestellten Ausführung ist eine Ausnehmung mit bogenförmigem Querschnitt angebracht, wobei die Berührungsfläche zwischen Keramikträger 1 und Trägerfuß 2 eben ausgebildet ist, so dass sich Keramikträger 1 und Trägerfuß 2 vollflächig berühren.

Die Ausführung gemäß **Figur 6** ist ebenfalls mit bogenförmigem Querschnitt ausgeführt, wobei die Berührung zwischen Keramikträger 1 und Trägerfuß 2 nur an verringerten Flächen erfolgt. Damit wird eine geringere Wärmeübertragung bewirkt.

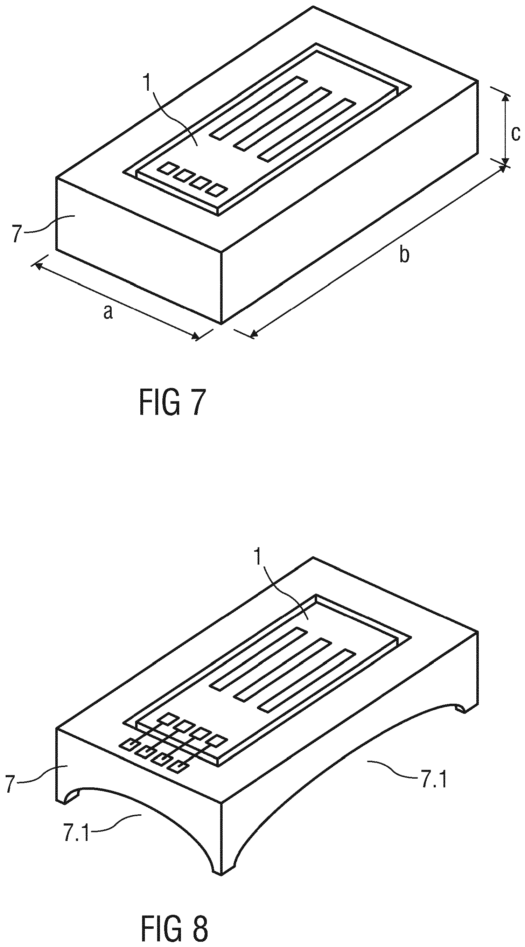

In **Figur 7** ist ein Sensorelement dargestellt, das von einem oben offenen Gehäuse 7 umgeben ist. Das Gehäuse 7 besteht aus einem offenporigen Material, um eine Gasdiffusion zu ermöglichen.

**Figur 8** zeigt ein Sensorelement, das von einem oben offenen Gehäuse 7 umgeben ist, wobei das Gehäuse 7 an seiner Unterseite mit Gehäuseausnehmungen 7.1 versehen ist.

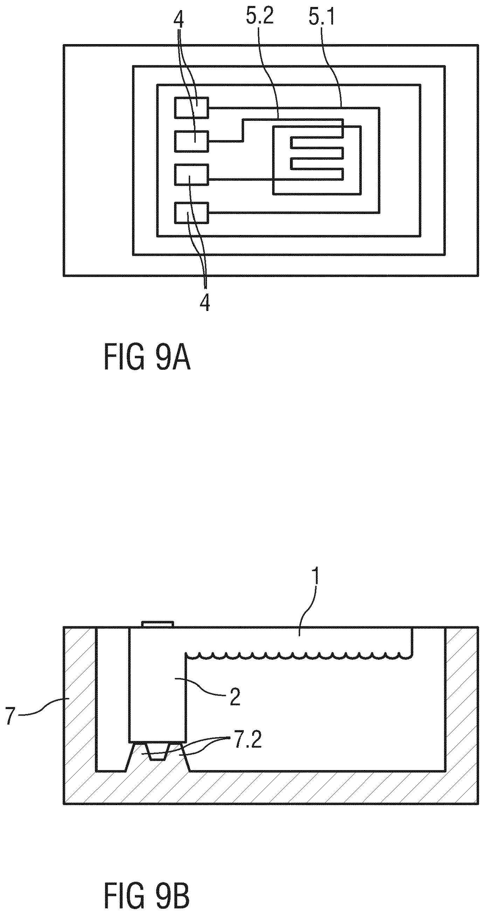

Die **Figuren 9a und 9b** zeigen die Draufsicht und einen Schnitt durch ein Sensorelement, das von einem Gehäuse 7 umgeben ist, wobei das Gehäuse 7 an seinem Boden Noppen 7.2 aufweist, auf die sich der Trägerfuß 2 so abstützt, dass nur geringe Berührungsflächen bestehen. Damit wird erreicht, dass nur eine geringe Wärmeableitung auf das Gehäuse 7 erfolgt. Auf dem Keramikträger 1 sind eine mäanderförmige erste Leiterstruktur 5.1 und eine zweite Leiterstruktur 5.2 angeordnet, wobei die mäanderförmige erste Leiterstruktur 5.1 als Messsensor und die zweite Leiterstruktur 5.2 als Heizer dient. Beide Leiterstrukturen 5.1 und 5.2 führen zu den Kontaktflächen 4.

### BEZUGSZEICHENLISTE

- 1: Keramikträger
- 1.1: Kühlkörperstruktur
- 2: Trägerfuß
- 2.1: Trägerfußausnehmungen
- 3: Sensitive Schicht
- 4: Kontaktflächen
- 4.1: Bondfelder
- 4.2: Lötkontakte
- 5: Leiterstruktur
- 5.1: Erste Leiterstruktur
- 5.2: zweite Leiterstruktur
- 5.3: Deckelektrode
- 6: Isolationsschicht
- 7: Gehäuse
- 7.1: Gehäuseausnehmungen
- 7.2: Noppen

## Patentansprüche

1. Keramisches Sensorelement umfassend einen Trägerfuß (2) und einem Keramikträger (1),
wobei der Keramikträger (1) als eine einseitig aufgehängte, freitragenden Membran ausgebildet ist, auf der sensitive Schichten und Kontaktflächen (4) angebracht sind, wobei die Dicke der Membran im Bereich zwischen 10 bis 50 µm liegt und die sensitiven Schichten und die Kontaktflächen (4) auf dem Keramikträger (1) aufgebracht sind, wobei auf dem Keramikträger (1) mäanderförmige Leiterstrukturen (5) und die Kontaktflächen (4) angeordnet sind und wobei der Keramikträger (1) an seiner Unterseite eine Kühlkörperstruktur (1.1) aufweist,
wobei der Trägerfuß (2) fest mit einem Trägerbauteil verbindbar ist,
wobei der Trägerfuß zwischen dem Keramikträger (1) und dem Trägerbauteil angeordnet ist und wobei der Trägerfuß (2) einstückig mit dem Keramikträger (1) ausgebildet ist.

2. Keramisches Sensorelement nach Anspruch 1, **dadurch gekennzeichnet, dass** auf dem Keramikträger (1) nebeneinander mehrere gassensitive Schichten (3) und die damit verbundenen Kontaktflächen (4) angeordnet sind.

3. Keramisches Sensorelement nach Anspruch 1 oder 2, **dadurch gekennzeichnet, dass** der Trägerfuß (2) Ausnehmungen aufweist, wobei eine Seite eben ausgebildet ist und an der gegenüberliegenden Seite Berührungsflächen angeordnet sind.

## Claims

1. Ceramic sensor element comprising a supporting foot (2) and a ceramic support (1), wherein the ceramic support (1) is formed as a cantilever membrane suspended at one end, on which sensitive layers and contact areas (4) are provided, wherein the thickness of the membrane lies in the range between 10 and 50 µm and the sensitive layers and the contact areas (4) have been applied to the ceramic support (1), wherein meandering conductor structures (5) and the contact areas (4) are arranged on the ceramic support (1) and wherein the ceramic support (1) has a heatsink structure (1.1) on its underside, wherein the supporting foot (2) is securely connectable to a supporting component, wherein the supporting foot is arranged between the ceramic support (1) and the supporting component and wherein the supporting foot (2) is formed in one piece with the ceramic support (1) .

2. Ceramic sensor element according to Claim 1, **characterized in that** a number of gas-sensitive layers (3) and the contact areas (4) connected to them are arranged alongside one another on the ceramic support (1).

3. Ceramic sensor element according to Claim 1 or 2, **characterized in that** the supporting foot (2) has clearances, wherein one side is smoothly formed and the opposite side has touching areas arranged on it.

## Revendications

1. Élément capteur en céramique comprenant un pied de support (2) et un support en céramique (1), le support en céramique (1) étant conçu comme une membrane en porte-à-faux, suspendue d'un côté, sur laquelle des couches sensibles et des surfaces de contact (4) sont appliquées, l'épaisseur de la membrane étant comprise entre 10 et 50 µm et les couches sensibles et les surfaces de contact (4) étant appliquées sur le support en céramique (1), des structures conductrices sinueuses (5) et les surfaces de contact (4) étant disposées sur le support en céramique (1) et le support en céramique (1) comportant une structure de dissipateur thermique (1.1) sur son côté inférieur, le pied de support (2) pouvant être relié de manière fixe à un composant de support, le pied de support étant disposé entre le support en céramique (1) et le composant de support et le pied de support (2) étant formé d'une seule pièce avec le support en céramique (1).

2. Élément capteur en céramique selon la revendication 1, **caractérisé en ce que** plusieurs couches (3) sensibles au gaz et les surfaces de contact (4) reliées à celles-ci sont disposées les unes à côté des autres sur le support en céramique (1).

3. Élément capteur en céramique selon la revendication 1 ou 2, **caractérisé en ce que** le pied de support (2) comporte des évidements, un côté étant conçu pour être plan et des surfaces tactiles étant disposées sur le côté opposé.
